# EUROPÄISCHE PATENTSCHRIFT

(11) **EP 1 283 406 B1**
(45) Veröffentlichungstag und Bekanntmachung des Hinweises auf die Patenterteilung: **27.02.2013**
(21) Anmeldenummer: 02017295.3
(22) Anmeldetag: 01.08.2002
(51) Int. Cl.: G01C 11/08

(54) **Bildverarbeitungsvorrichtung für ein Fahrzeug und Betriebsverfahren**
Image processing apparatus for a vehicle and method for the same
Dispositif et méthode de traitement d'images pour un véhicule

(30) Priorität: 01.08.2001 DE 10137582
(43) Veröffentlichungstag der Anmeldung: 12.02.2003
(73) Patentinhaber: Continental Automotive GmbH, 30165 Hannover (DE)
(72) Erfinder: Ritter, Dieter, Dr., 90762 Fürth (DE)

(56) Entgegenhaltungen:
- WO-A1-01/01347
- DE-A1- 10 041 277
- US-A- 5 353 030
- US-A- 5 719 773
- US-A- 5 961 571

## Beschreibung

Die Erfindung betrifft eine Bildverarbeitungsvorrichtung für ein Fahrzeug, insbesondere für ein Navigationssystem oder ein Fahrzeugsteuerungssystem eines Kraftfahrzeugs, gemäß dem Oberbegriff des Anspruchs 1 sowie ein entsprechendes Betriebsverfahren gemäß dem Oberbegriff des Anspruchs 9.

Eine derartige Bildverarbeitungsvorrichtung bzw. ein derartiges Betriebsverfahren ist aus der WO 01/01347 A1 bekannt. Vergleichbare Bildverarbeitungsvorrichtungen und Verfahren sind auch aus der US-A-5,961,571 und der DE 100 41 277 A1 bekannt.

Aus EP 0 406 946 B1 ist ein Navigationssystem für ein Kraftfahrzeug bekannt, bei dem eine in dem Kraftfahrzeug montierte Kamera ein Umgebungsbild des Kraftfahrzeugs aufnimmt und auf einem Bildschirm im Fahrzeuginnenraum wiedergibt. Darüber hinaus verfügt das bekannte Navigationssystem über einen Topographiedatenspeicher beispielsweise in Form einer CD-ROM, in der in herkömmlicher Weise eine digitalisierte Straßenkarte abgelegt ist. Schließlich verfügt das bekannte Navigationssystem über einen GPS-Positionssensor, um die aktuelle Position des Kraftfahrzeugs zu ermitteln, wobei in Abhängigkeit von dem gewünschten Reiseziel, der aktuellen Position des Kraftfahrzeugs und den gespeicherten Straßendaten Navigationsanweisungen ausgegeben werden. Diese Navigationsanweisungen bestehen hierbei beispielsweise aus perspektivischen Richtungspfeilen, die in das von der Kamera aufgenommene Umgebungsbild des Kraftfahrzeugs eingeblendet werden, was dem Fahrer die Interpretation der Navigationsanweisungen erleichtert.

Nachteilig an dem vorstehend beschriebenen bekannten Navigationssystem ist jedoch die Tatsache, dass das von der Kamera aufgenommene Umgebungsbild nur einen relativ geringen Informationsgehalt hat, da der weitere Straßenverlauf beispielsweise durch Häuserecken oder ähnliches abgedeckt sein kann.

Aus EP 1 054 354 A1, WO 00/66977 und WO 00/63842 sind weiterhin Navigationssysteme bekannt, die in Abhängigkeit von der durch einen Positionssensor erfaßten aktuellen Position des Kraftfahrzeuges und der in einem Topographiedatenspeicher abgelegte digitalen Straßenkarte ein modellhaftes perspektivisches Umgebungsbild des Kraftfahrzeugs synthetisieren, das dem Fahrer auf einem Bildschirm dargeboten werden kann, was dem Fahrer die Navigation erleichtert.

Nachteilig an diesen bekannten Navigationssystemen ist die Tatsache, dass die Positionsbestimmung mit den bekannten Positionssensoren, wie beispielsweise GPS, Odometer oder Gyrometer nur eine Genauigkeit von 5 bis 10 m aufweist, so dass das künstlich erzeugte modellhafte Umgebungsbild unter Umständen nicht der tatsächlichen Fahrzeugposition entspricht, was zu einer Verwirrung des Fahrers bei der Navigation führt. Dies gilt insbesondere dann, wenn die ermittelte Fahrzeugposition audfgrund von Sensorfehlern auf eine benachbarte Straße springt.

Der Erfindung liegt deshalb die Aufgabe zugrunde, die vorstehend beschriebenen bekannten Navigationssysteme dahingehend zu verbessern, dass dem Fahrer ein perspektivisches Umgebungsbild dargeboten wird, das möglichst genau der tatsächlichen Fahrzeugposition entspricht und darüber hinaus einen möglichst großen Informationsgehalt aufweist, um dem Fahrer die Navigation zu erleichtern.

Die Erfindung wird, ausgehend von einer bekannten Bildverarbeitungsvorrichtung gemäß dem Oberbegriff des Anspruchs 1, durch die kennzeichnenden Merkmale des Anspruchs 1 bzw. - hinsichtlich eines entsprechenden Betriebsverfahrens - durch die Merkmale des Anspruchs 9 gelöst.

Die Erfindung umfaßt die allgemeine technische Lehre, ein in Abhängigkeit von der durch einen Positionssensor erfaßten Fahrzeugposition und den in einem Topographiedatenspeicher gespeicherten Topographie- bzw. Straßendaten ermitteltes modellhaftes Umgebungsbild mit dem durch ein Bildaufnahmegerät erzeugten Umgebungsbild zusammenzuführen und dadurch ein korrigierten Umgebungsbild zu erhalten.

Auf diese Weise werden die Vorteile einer künstlichen Bilderzeugung einerseits und einer natürlichen Bilderfassung andererseits kombiniert, wohingegen die Nachteile einer künstlichen Bilderzeugung weitgehend entfallen. So enthält das korrigierte Umgebungsbild mehr Informationen als das von dem Bildaufnahmegerät erfaßte Umgebungsbild, da beispielsweise auch der Verlauf der Straße dargestellt werden kann, der in dem natürlichen Bild abgedeckt ist. Weiterhin wird durch die Zusammenführung des künstlich aufgenommenen modellhaften Bildes mit dem durch das Bildaufnahmegerät erfaßten Umgebungsbild die relative Ungenauigkeit bei der Positionsbestimmung weitgehend kompensiert.

Die erfindungsgemäße Bildverarbeitungsvorrichtung weist eine Bildsynthetisierungseinrichtung auf, die eingangsseitig mit dem Positionssensor und dem Topographiedatenspeicher verbunden ist und in Abhängigkeit von der aktuellen Fahrzeugposition und der in dem Topographiedatenspeicher abgelegten digitalisierten Straßenkarte ein modellhaftes Umgebungsbild erzeugt. Die Arbeitsweise und der Aufbau einer derartigen Bildsynthetisierungseinrichtung ist detailliert in den bereits vorstehend zitierten Druckschriften EP 1 054 354 A1, WO 00/66977 und WO 00/63842 beschrieben, so dass im Folgenden auf eine detaillierte Beschreibung des Aufbaus und der Funktionsweise der Bildsynthetisierungseinrichtung verzichtet wird und diesbezüglich auf die vorstehend erwähnten Druckschriften verwiesen wird, deren Inhalt der vorliegenden Beschreibung zuzurechnen ist.

Weiterhin weist die erfindungsgemäße Bildverarbeitungsvorrichtung eine Überlagerungseinheit auf, die eingangsseitig mit der Bildsynthetisierungseinrichtung und einem Bildaufnahmegerät verbunden ist und das von der Bildsynthetisierungseinrichtung erzeugte erste modellhafte Umgebungsbild mit dem von dem Bildaufnahmegerät erzeugten Umgebungsbild zusammenführt.

Die Art der Zusammenführung der beiden Umgebungsbilder kann in der einfachsten Form durch eine Überblendung erfolgen, jedoch weist die Überlagerungseinheit vorzugsweise einen Korrelator auf, der das von der Bildsynthesierungseinrichtung erzeugte modellhafte Umgebungsbild mit dem durch das Bildaufnahmegerät aufgenommenen Umgebungsbild entsprechend einer vorgegebenen Gütefunktion korreliert.

Erfindungsgemäß ist die Überlagerungseinheit ausgangsseitig in einer Rückkopplungsschleife mit einer dem Positionssensor nachgeschalteten Recheneinheit verbunden, die das Positionssignal in Abhängigkeit von dem korrigierten Umgebungsbild korrigiert. Bei der Bestimmung der aktuellen Fahrzeugposition wird hierbei also nicht nur das Ausgangssignal des Positionssensors, sondern auch das korrigierte Umgebungsbild berücksichtigt. So kann es beispielsweise vorkommen, dass zwischen der von dem Positionssensor angezeigten Fahrzeugposition einerseits und der durch das korrigierte Umgebungsbild vorgegebenen Fahrzeugposition ein räumlicher Versatz besteht, der dann entsprechend korrigiert werden kann.

In der bevorzugten Ausführungsform der Erfindung ist zwischen dem Bildaufnahmegerät und der Überlagungseinheit eine Bildverarbeitungseinheit angeordnet, die aus dem von dem Bildaufnahmegerät aufgenommenen Umgebungsbild ein zweites modellhaftes Umgebungsbild errechnet, das von der Überlagerungseinheit mit dem ersten modellhaften Umgebungsbild zusammengeführt wird. Bei diesem Ausführungsbeispiel wird das Ausgangssignal des Bildaufnahmegeräts also erst in ein modellhaftes Umgebungsbild umgerechnet, um bei der Zusammenführung in der Überlagerungseinheit Umgebungsbilder des gleichen Typs zusammenzuführen können. So können die zusammenzuführenden Bilder beispielsweise aus Drahtgittermodellen bestehen, wie sie beispielsweise in Virtual-Reality-Programmen üblich sind. Darüber hinaus können die zusammenzuführenden Bilder auch Topographien, 3D-Geländebilder und 3D-Umweltbilder beispielsweise von Ampeln, Bäumen, Lampen etc. enthalten.

Bei diesem Ausführungsbeispiel ist die Überlagerungseinheit ausgangsseitig vorzugsweise in einer ersten Rückkopplungsschleife mit der Bildverarbeitungseinheit verbunden, um die Berechnung des zweiten modellhaften Umgebungsbildes aus dem von dem Bildaufnahmegerät aufgenommenen natürlichen Umgebungsbild in Abhängigkeit von dem korrigierten Umgebungsbild zu optimieren. So kann die Straßenszenenerkennung durch die zwischen dem Bildaufnahmegerät und der Überlagerungseinheit angeordnete Bildverarbeitungseinheit durch das Vorwissen über den Straßenverlauf optimiert werden.

Die dem Positionssensor nachgeschaltete Recheneinheit ist eingangsseitig vorzugsweise mit mehreren Positionssensoren verbunden, um die tatsächliche Fahrzeugposition durch eine gegenseitige Plausibilitätprüfung ("cross-checking") der Sensorsignale möglichst genau bestimmen zu können, wobei eine gewichtete Wahrscheinlichkeitsanalyse vorgenommen werden kann.

Als Positionssensor können beispielsweise Odometer, Gyrometer, Map-Matching oder GPS-Empfänger verwendet werden, jedoch wird vorzugsweise eine Kombination dieser Positionssensoren verwendet.

Bei dem Bildaufnahmegerät zur Erfassung des Umgebungsbildes des Kraftfahrzeuges wird vorzugsweise eine herkömmliche Kamera verwendet, jedoch kann es auch vorteilhaft sein, eine Infrarotkamera zu verwenden, da diese beispielsweise auch bei Nebel oder schlechten Sichtverhältnissen ein brauchbares Umgebungsbild liefert.

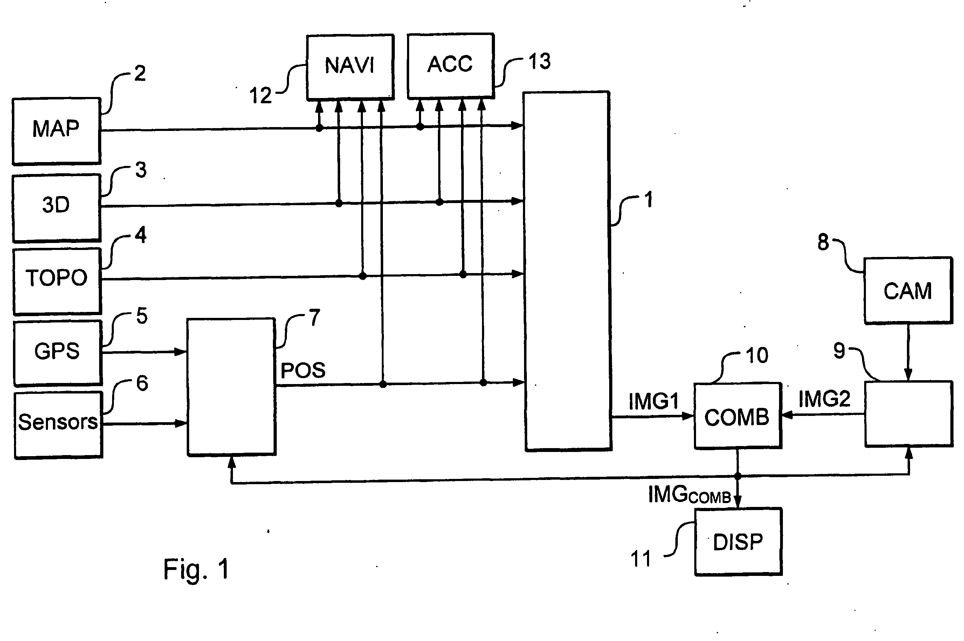

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figur 1 näher erläutert. Es zeigt:
Fig. 1 eine erfindungsgemäße Bildverarbeitungsvorrichtung zur Ansteuerung eines Navigationssystems und eines Fahrzeugsteuerungssystems in Form eines Blockschaltbildes.

Die in Figur 1 dargestellte Bildverarbeitungsvorrichtung ermöglicht die Erzeugung eines perspektivischen modellhaften Umgebungsbildes aus der aktuellen Fahrzeugposition und der Umgebung des Kraftfahrzeugs. Hierzu weist die Bildverarbeitungsvorrichtung eine Bildsynthetisierungseinheit 1 auf, die eingangsseitig mit mehreren Speichereinheiten 2-4 verbunden ist, wobei die Speichereinheit 2 eine digitalisierte Straßenkarte enthält, während die Speichereinheit 3 digitalisierte Modelle dreidimensionaler Objekte wie beispielsweise von Häusern enthält, wohingegen in der Speichereinheit 4 topographische Daten der Umgebung abgelegt sind.

Darüber hinaus weist die erfindungsgemäße Bildverarbeitungsvorrichtung einen GPS-Empfänger 5 und Radsensoren 6 und/oder Richtungssensoren bzw. Gyrometer auf, die ausgangsseitig mit einer Recheneinheit 7 verbunden sind, wobei die Recheneinheit 7 aus den Ausgangssignalen des GPS-Empfängers 5 und der Radsensoren 6 ein korrigiertes Positionssignal POS berechnet, das der Bildsynthetisierungseinrichtung 1 zugeführt wird.

Die Bildsynthetisierungseinrichtung 1 berechnet dann in Abhängigkeit von dem Positionssignal POS und den in den Speichereinheiten 2-4 abgelegten Straßen- bzw. Topographiedaten ein perspektivisches, modellhaftes Umgebungsbild, wobei im folgenden auf eine detaillierte Beschreibung des Aufbaus und der Funktionsweise der Bildsynthetisierungseinrichtung 1 verzichtet wird und diesbezüglich auf die bereits vorstehend zitierten Druckschriften EP 1 054 354 A1, WO 00/66977 sowie WO 00/63842 verwiesen wird.

Darüber hinaus weist die erfindungsgemäße Bildverarbeitungsvorrichtung eine in dem Kraftfahrzeug ortsfest montierte Kamera 8 auf, die ein Umgebungsbild des Kraftfahrzeuges erzeugt, wobei das von der Kamera 8 aufgenommene Umgebungsbild von einer der Kamera 8 nachgeschalteten Bildverarbeitungseinheit 9 in ein modellhaftes Umgebungsbild umgerechnet wird, das hinsichtlich seines Wiedergabestandards weitgehend dem von der Bildsynthetisierungseinrichtung 1 erzeugten Umgebungsbild entspricht.

Sowohl die Bildsynthetisierungseinrichtung 1 als auch die Bildverarbeitungseinheit 9 sind ausgangsseitig mit einer Überlagerungseinheit 10 verbunden, die das von der Bildsynthetisierungseinrichtung 1 erzeugte modellhafte Umgebungsbild mit dem von der Bildverarbeitungsvorrichtung 9 erzeugten modellhaften Umgebungsbild zusammenführt und dadurch ein korrigiertes Umgebungsbild IMG_{COMB} erzeugt. Die Zusammenführung der beiden modellhaften Umgebungsbilder durch die Überlagerungseinheit 10 erfolgt hierbei durch einen Korrelator entsprechend einer vorgegebenen Gütefunktion.

Ausgangsseitig ist die Überlagerungseinheit 10 mit einem im Fahrzeuginnenraum 11 im Sichtbereich des Fahrers angebrachten Display 11 verbunden, um dem Fahrer das korrigierte Umgebungsbild darzustellen.

Darüber hinaus ist die Überlagerungseinheit 10 ausgangsseitig in einer ersten Rückkopplungsschleife mit der Bildverarbeitungseinheit 9 verbunden, um die Umrechnung des von der Kamera 8 aufgenommenen Umgebungsbildes in das der Überlagerungseinheit 10 zugeführte modellhafte Umgebungsbild durch die Straßenszenenerkennung und das dabei erworbene Vorwissen zu optimieren. Ferner ist die Überlagerungseinheit 10 ausgangsseitig auch mit der Recheneinheit 7 verbunden, um bei der Berechnung des Positionssignals POS nicht nur die Ausgangssignale des GPS-Empfängers 5 und der Radsensoren 6 zu berücksichtigen, sondern auch das korrigierte Umgebungsbild IMG_{COMB}. So kann es beispielsweise vorkommen, dass zwischen der von dem GPS-Empfänger 5 und den Radsensoren 6 erfaßten Fahrzeugposition und der sich aus dem korrigierten Umgebungsbild ergebenden Fahrzeugposition ein räumlicher Versatz besteht, so dass das Positionssignal POS von der Recheneinheit 7 entsprechend korrigiert werden muss.

Schließlich sind die Speichereinheiten 2-4 sowie die Recheneinheit 7 ausgangsseitig mit einem herkömmlichen Navigationssystem 12 und einem Fahrzeugsteuerungssystem 13 verbunden, so dass das optimierte und korrigierte Umgebungsbild am Ausgang der Überlagerungseinheit 10 auch zur Fahrzeugnavigation bzw. -Steuerung verwendet wird.

Die Erfindung ist nicht auf das vorstehend beschriebene bevorzugte Ausführungsbeispiel beschränkt. Vielmehr ist eine Vielzahl von Varianten und Abwandlungen denkbar, die ebenfalls von dem erfindungsgemäßen Gedanken Gebrauch machen und deshalb in den Schutzbereich fallen.

## Patentansprüche

1. Bildverarbeitungsvorrichtung für ein Fahrzeug, insbesondere für ein Navigationssystem oder ein Fahrzeugsteuerungssystem eines Kraftfahrzeugs, mit
mindestens einem Bildaufnahmegerät (8) zur Erfassung eines Umgebungsbildes des Fahrzeugs,
mindestens einem Positionssensor (5, 6) zur Erfassung der Fahrzeugposition,
mindestens einem Topographiedatenspeicher (2-4),
einer eingangsseitig mit dem Positionssensor (5, 6) und dem Topographiedatenspeicher (2-4) verbundenen Bildsynthetisierungseinrichtung (1) zur Erzeugung eines ersten modellhaften Umgebungsbildes in Abhängigkeit von der Fahrzeugposition und den gespeicherten Topographiedaten,
einer eingangsseitig mit dem Bildaufnahmegerät (8) und der Bildsynthetisierungseinrichtung (1) verbundenen Überlagerungseinheit (10) zur Zusammenführung des ersten modellhaften Umgebungsbildes mit dem aufgenommenen Umgebungsbild zu einem korrigierten Umgebungsbild,
**dadurch gekennzeichnet , dass** die Überlagerungseinheit (10) ausgangsseitig in einer Rückkopplungsschleife mit einer dem Positionssensor (5, 6) nachgeschalteten Recheneinheit (7) verbunden ist, die das Positionssignal in Abhängigkeit von dem korrigierten Umgebungsbild korrigiert.

2. Bildverarbeitungsvorrichtung nach dem vorangehenden Anspruch,
**dadurch gekennzeichnet , dass** die Überlagerungseinheit (10) einen Korrelator aufweist, der das erste modellhafte Umgebungsbild entsprechend einer vorgegebenen Gütefunktion mit dem aufgenommenen Umgebungsbild korreliert.

3. Bildverarbeitungsvorrichtung nach mindestens einem der vorhergehenden Ansprüche,
**dadurch gekennzeichnet , dass** zwischen dem Bildaufnahmegerät (8) und der Überlagerungseinheit (10) eine Bildverarbeitungseinheit (9) angeordnet ist, die aus dem aufgenommenen Umgebungsbild ein zweites modellhaftes Umgebungsbild errechnet, das von der Überlagerungseinheit (10) mit dem ersten modellhaften Umgebungsbild zusammengeführt wird.

4. Bildverarbeitungsvorrichtung nach dem vorangehenden Anspruch,
**dadurch gekennzeichnet , dass** die Überlagerungseinheit (10) ausgangsseitig in einer ersten Rückkopplungsschleife mit der Bildverarbeitungseinheit (9) verbunden ist, um die Berechnung des zweiten modellhaften Umgebungsbild aus dem aufgenommenen Umgebungsbild in Abhängigkeit von dem korrigierten Umgebungsbild zu optimieren.

5. Bildverarbeitungsvorrichtung nach dem vorangehenden Anspruch,
**dadurch gekennzeichnet , dass** die Recheneinheit (7) eingangsseitig mit mehreren Positionssensoren (5, 6) verbunden ist, um das Positionssignal zu optimieren.

6. Bildverarbeitungsvorichtung nach mindestens einem der vorhergehenden Ansprüche,
**dadurch gekennzeichnet , dass** der Positionssensor ein GPS-Empfänger (5), ein Radsensor (6), ein Gyrometer und/oder ein Odometer ist.

7. Bildverarbeitungsvorichtung nach mindestens einem der vorhergehenden Ansprüche,
**dadurch gekennzeichnet , dass** der Topographiedatenspeicher (2-4), der Positionssensor (5, 6) und/oder die Überlagerungseinheit (10) ausgangsseitig mit einem Navigationssystem (12) und/oder einem Fahrzeugsteuerungsystem (13) verbunden ist.

8. Bildverarbeitungsvorichtung nach mindestens einem der vorhergehenden Ansprüche,
**dadurch gekennzeichnet , dass** die Überlagerungseinheit (10) ausgangsseitig mit einem Display (11) verbunden ist, um das korrigierte Umgebungsbild darzustellen.

9. Verfahren zum Betrieb einer Bildverarbeitungsvorrichtung für ein Fahrzeug, insbesondere zum Betrieb eines Navigationssystems oder eines Fahrzeugsteuerungssystems, mit den folgenden Schritten:
- Aufnahme eines Umgebungsbildes des Fahrzeugs,
- Erfassung der Fahrzeugposition durch einen Positionssensor,
- Synthetisierung eines ersten modellhaften Umgebungsbildes in Abhängigkeit von der erfassten Fahrzeugposition unter Berücksichtigung von vorgegebenen Topographiedaten,
- Zusammenführung des synthetisierten ersten modellhaften Umgebungsbildes mit dem aufgenommenen Umgebungsbild zu einem korrigierten Umgebungsbild,
- Berücksichtigen des korrigierten Umgebungsbildes bei der Ermittlung der Fahrzeugposition in einer zweiten Rückkopplungsschleife.

10. Verfahren nach dem vorangehenden Anspruch,
**dadurch gekennzeichnet , dass** das synthetisierte erste modellhafte Umgebungsbild entsprechend einer vorgegebenen Gütefunktion mit dem aufgenommenen Umgebungsbild korreliert wird.

11. Verfahren nach einem der vorangehenden Ansprüche,
**dadurch gekennzeichnet , dass** aus dem aufgenommenen Umgebungsbild ein zweites modellhaftes Umgebungsbild errechnet wird, das mit dem synthetisierten ersten modellhaften Umgebungsbild zusammengeführt wird.

12. Verfahren nach einem der vorangehenden Ansprüche,
**dadurch gekennzeichnet , dass** bei der Berechnung des zweiten modellhaften Umgebungsbildes aus dem aufgenommenen Umgebungsbild das korrigierte Umgebungsbild in einer ersten Rückkopplungsschleife berücksichtigt wird.

## Claims

1. Image processing apparatus for a vehicle, in particular for a navigation system or a vehicle control system of a motor vehicle, having
at least one image recording device (8) for recording an image of the surroundings of the vehicle,
at least one position sensor (5, 6) for sensing the position of the vehicle,
at least one topography data memory (2-4),
an image synthesizing device (1), connected on the input side to the position sensor (5, 6) and to the topography data memory (2-4), for generating a first model-like image of the surroundings as a function of the position of the vehicle and the stored topography data,
a superimposition unit (10) which is connected on the input side to the image recording device (8) and to the image synthesizing device (1) and has the purpose of combining the first model-like image of the surroundings with the recorded image of the surroundings to form a corrected image of the surroundings,
**characterized in that** the superimposition unit (10) is connected on the output side in a feedback loop to a computing unit (7) which is connected downstream of the position sensor (5, 6) and which corrects the position signal as a function of the corrected image of the surroundings.

2. Image processing apparatus according to the preceding claim,
**characterized in that** the superimposition unit (10) has a correlator which correlates the first model-like image of the surroundings with the recorded image of the surroundings in accordance with a predefined quality function.

3. Image processing apparatus according to at least one of the preceding claims,
**characterized in that** an image processing unit (9) is arranged between the image recording device (8) and the superimposition unit (10), which image processing unit (9) calculates, on the basis of the recorded image of the surroundings, a second model-like image of the surroundings which is combined with the first model-like image of the surroundings by the superimposition unit (10).

4. Image processing apparatus according to the preceding claim,
**characterized in that** the superimposition unit (10) is connected to the image processing unit (9) on the output side in a first feedback loop in order to optimize the calculation of the second model-like image of the surroundings on the basis of the recorded image of the surroundings as a function of the corrected image of the surroundings.

5. Image processing apparatus according to the preceding claim,
**characterized in that** the computing unit (7) is connected on the input side to a plurality of position sensors (5, 6) in order to optimize the position signal.

6. Image processing apparatus according to at least one of the preceding claims,
**characterized in that** the position sensor is a GPS receiver (5), a wheel sensor (6), a gyrometer and/or an odometer.

7. Image processing device according to at least one of the preceding claims,
**characterized in that** the topography data memory (2 - 4), the position sensor (5, 6) and/or the superimposition unit (10) are connected on the output side to a navigation system (12) and/or a vehicle control system (13).

8. Image processing apparatus according to at least one of the preceding claims,
**characterized in that** the superimposition unit (10) is connected on the output side to a display (11) in order to display the corrected image of the surroundings.

9. Method for operating an image processing apparatus for a vehicle, in particular for operating a navigation system or a vehicle control system, having the following steps:
- recording an image of the surroundings of the vehicle,
- sensing the position of the vehicle by means of a position sensor,
- synthesizing a first model-like image of the surroundings as a function of the sensed position of the vehicle taking into account the predefined topography data,
- combining the synthesized first model-like image of the surroundings with the recorded image of the surroundings to form a corrected image of the surroundings, and
- taking into account the corrected image of the surroundings during the determination of the position of the vehicle in a second feedback loop.

10. Method according to the preceding claim,
**characterized in that** the synthesized first model-like image of the surroundings is correlated with the recorded image of the surroundings in accordance with a predefined quality function.

11. Method according to one of the preceding claims,
**characterized in that** a second model-like image of the surroundings is calculated with the recorded image of the surroundings and is combined with the synthesized first model-like image of the surroundings.

12. Method according to one of the preceding claims,
**characterized in that**, in the calculation of the second model-like image of the surroundings on the basis of the recorded image of the surroundings, the corrected image of the surroundings is taken into account in a first feedback loop.

## Revendications

1. Dispositif de traitement d'images pour un véhicule, notamment pour un système de navigation ou pour un système de conduite d'un véhicule automobile, comprenant
au moins un appareil (8) de prise de vue pour l'enregistrement d'une image de l'environnement du véhicule,
au moins un capteur (5, 6) de position pour la détection de la détection du véhicule,
au moins une mémoire (2 à 4) de données topographiques,
un dispositif (1) de synthétisation d'image, relié du côté de l'entrée au capteur (5, 6) de position et à la mémoire (2 à 4) de données topographiques et destiné à la production d'une première image en modèle de l'environnement du véhicule en fonction de la position du véhicule et des données topographiques mémorisées,
une unité (10) de superposition, reliée du côté de l'entrée à l'appareil (8) de prise de vue et au dispositif (1) de synthétisation d'image et destinée à réunir la première image d'environnement en modèle et l'image d'environnement enregistrée en une image d'environnement corrigée,
**caractérisé en ce que** l'unité (10) de superposition est reliée du côté de la sortie en une boucle de réaction à une unité (7) informatique montée en aval du capteur (5, 6) de position et corrigeant le signal de position en fonction de l'image d'environnement corrigée.

2. Dispositif de traitement d'images suivant la revendication précédente, **caractérisé en ce que** l'unité (10) de superposition comporte un corrélateur qui corrèle la première image d'environnement en modèle, conformément à une fonction de qualité prescrite, à l'image d'environnement enregistrée.

3. Dispositif de traitement d'images suivant au moins l'une des revendications précédentes, **caractérisé en ce qu'**il est monté entre l'appareil (8) de prise de vues et l'unité (10) de superposition une unité (9) de traitement de l'image, qui calcule, à partir de l'image d'environnement enregistrée, une deuxième image d'environnement en modèle, qui est réunie avec la première image d'environnement en modèle par l'unité (10) de superposition.

4. Dispositif de traitement d'images suivant la revendication précédente,
**caractérisé en ce que** l'unité (10) de superposition est reliée du côté de la sortie en une première boucle de réaction à l'unité (9) de traitement d'image pour optimiser, en fonction de l'image d'environnement corrigée, le calcul de la deuxième image d'environnement en modèle à partir de l'image d'environnement enregistrée.

5. Dispositif de traitement d'images suivant la revendication précédente,
**caractérisé en ce que** l'unité (7) informatique est reliée du côté de l'entrée à plusieurs capteurs (5, 6) de position pour optimiser le signal de position.

6. Dispositif de traitement d'images suivant au moins l'une des revendications précédentes,
**caractérisé en ce que** le capteur de position est un récepteur (5) GPS, un capteur (6) de roue, un gyromètre et/ou un odomètre.

7. Dispositif de traitement d'images suivant au moins l'une des revendications précédentes,
**caractérisé en ce que** la mémoire (2 à 4) de données topographiques, le capteur (5, 6) de position et/ou l'unité (10) de superposition sont reliés du côté de la sortie, un système (12) de navigation et/ou à un système (13) de conduite de véhicule.

8. Dispositif de traitement d'images suivant au moins l'une des revendications précédentes,
**caractérisé en ce que** l'unité (10) de superposition est reliée du côté de la sortie à un affichage (11) pour représenter l'image d'environnement corrigée.

9. Procédé pour faire fonctionner un dispositif de traitement d'images pour un véhicule, notamment pour le fonctionnement d'un système de navigation ou d'un système de conduite de véhicule, comprenant les stades suivantes :
- on enregistre une image d'environnement du véhicule,
- on détecte la position du véhicule par un capteur de position,
- on synthétise une première image d'environnement en modèle en fonction de la position du véhicule, qui a été détectée, en tenant compte de données topographiques prescrites,
- on réunit la première image d'environnement en modèle, qui a été synthétisée, à l'image d'environnement enregistrée en une image d'environnement corrigée,
- on tient compte de l'image d'environnement corrigée lors de la détermination de la position du véhicule dans une deuxième boucle de réaction.

10. Procédé suivant la revendication précédente, **caractérisé en ce que** l'on effectue une corrélation de la première image d'environnement en modèles, qui a été synthétisée, conformément à une fonction de qualité prescrite, avec l'image d'environnement enregistrée.

11. Procédé suivant l'une des revendications précédentes, **caractérisé en ce que** l'on calcule, à partir de l'image d'environnement enregistrée, une deuxième image d'environnement en modèle, que l'on réunit à la première image d'environnement en modèle, qui a été synthétisée.

12. Procédé suivant l'une des revendications précédentes, **caractérisé en ce que**, dans le calcul de la deuxième image d'environnement en modèle à partir de l'image d'environnement enregistrée, on tient compte de l'image d'environnement corrigée dans une première boucle de réaction.
